# EUROPEAN PATENT APPLICATION

(11) **EP 1 718 091 A1**
(43) Date of publication of application: **02.11.2006**
(21) Application number: 06251589.5
(22) Date of filing: 24.03.2006
(51) Int. Cl.: H04Q 7/36

(54) **Method and system for evaluating performance of a receiver network**

(30) Priority: 25.04.2005 US 114759
(71) Applicant: Agilent Technologies, Inc., Palo Alto CA 94303-0870 (US)
(72) Inventor: Cutler, Robert T., Mukilteo, WA 98275 (US)
(74) Representative: Jehan, Robert

(57) **Abstract**

Performance data for a receiver system are generated based on one or more receiver locations and one or more performance parameters. The performance parameters may relate to the environment, the receivers, and a signal emitter. The performance data are then displayed to a user. The location of one or more receivers in the system may also be optimized using the performance data.

## Description

The present invention relates to a method of and apparatus for valuating the performance of a receiver network and for generating a location for one or more receivers.

Systems of receivers are used in a variety of applications from cellular networks to deep space communications. For cellular systems, tools have been developed to assist in the placement of the cell-towers to ensure network coverage. For example, in a cellular system the simulation of received signal strength between a base station and mobile is designed to ensure coverage and proper handoff operation as a mobile changes location, all at a minimum cost.

Non-cellular receiver systems need to optimize receiver locations as well. In non-cellular systems, however, the number of parameters to optimize can be greater. For example, a geolocation system based on TDOA techniques, the performance of the system requires that the geolocation accuracy be optimized at a minimum cost. But geolocation accuracy can be affected by a number of parameters, such as elevation and multipath conditions. And in a receiver system capable of multiple tasks, such as both detecting and geolocating signal emitters, many more parameters have to be optimized.

Other factors can also influence the optimization of receiver locations. Typically there are a limited number of locations in which receivers can be placed. Locations may be limited by availability of power, communications and property rights, for example. The number of receiver to be used may be limited by budgetary considerations.

The present invention seeks to provide a method and apparatus for evaluating and for optimising the performance of a receiver network.

According to an aspect of the present invention there is provided a method of evaluating the performance of a receiver network as specified in claim 1.

According to another aspect of the present invention there is provided a method of generating a location for one or more RF receivers as specified in claim 6.

According to another aspect of the present invention there is provided a system for evaluating the performance of an RF receiver system as specified in claim 9.

In the preferred embodiments, in the method and system for evaluating and optimizing RF receiver locations performance data for a receiver system is generated based on one or more receiver locations and one or more performance parameters. The performance parameters may relate to the environment, the receivers, and a signal emitter. The performance data are then displayed to a user. The location of one or more receivers in the system may also be optimized using the performance data.

Embodiments of the present invention are described below, by way of example only, with reference to the accompanying drawings, in which:
**FIG.1** is a block diagram of a system for determining optimal RF receiver locations in an embodiment in accordance with the invention;
**FIG. 2** is a flowchart of a first method for evaluating and optimizing RF receiver locations in an embodiment in accordance with the invention;
**FIG. 3** is a flowchart of a second method for evaluating and optimizing RF receiver locations in an embodiment in accordance with the invention;
**FIG. 4** depicts a user interface displaying a first receiver placement image in an embodiment in accordance with the invention;
**FIG. 5** depicts a user interface displaying a second receiver placement image in an embodiment in accordance with the invention;
**FIG. 6** depicts a user interface displaying a third receiver placement image in an embodiment in accordance with the invention; and
**FIG. 7** depicts a user interface displaying a fourth receiver placement image in an embodiment in accordance with the invention.

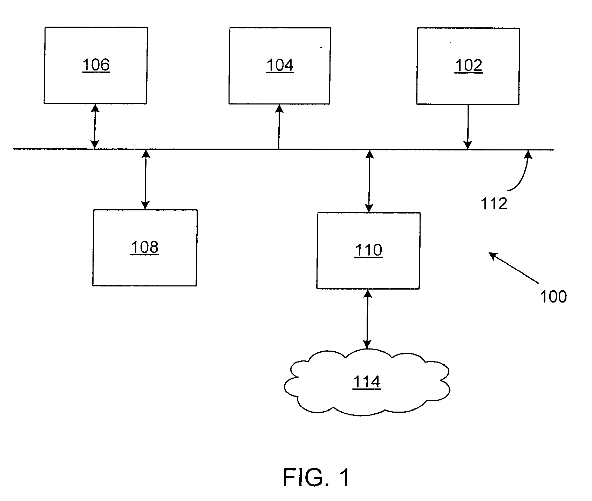

With reference to the figures and in particular with reference to FIG.1, there is shown a block diagram of a system for determining optimal RF receiver locations in an embodiment in accordance with the invention. System 100 includes input device 102, display 104, processor 106, memory 108, and communications controller 110. Input device 102 is implemented as any type of input device that can input data into system 100. Examples of such input devices include, but are not limited to, a keyboard, mouse, touch screen, and stylus.

Input device 102, display 104, processor 106, memory 108, and communications controller 110 communicate via connection 112. Display 104 displays images that are generated by processor 106, read from memory 108, or received from network 114. Memory 108 is implemented as any type of memory, such as, for example, random access memory, read only memory, and flash memory. Communications controller 110 controls communications between system 100 and network 114. Network 114 is configured as any type of network, including, but not limited to, a local area network and the Internet.

System 100 is implemented as a computing device and connection 112 as a system bus in an embodiment in accordance with the invention. Examples of a computing device include, but are not limited to, a computer, personal digital assistant, and a wireless communication device such as a cellular phone. Input device 102, visual display device 104, processor 106, memory 108, and communications controller 110 are implemented in the computer. An optimizing receiver placement tool is implemented as an application program that is executed by processor 106 in an embodiment in accordance with the invention.

In another embodiment in accordance with the invention, input device 102, visual display device 104, processor 106, memory 108, and communications controller 110 are distributed across several devices. For example, memory may be implemented in one device, input device 102, processor 106, and communications controller 110 may be implemented in a second device with the second device connected to display 104. And the optimizing RF receiver location tool is implemented as a program accessed or downloaded from a server in network 114 in an embodiment in accordance with the invention.

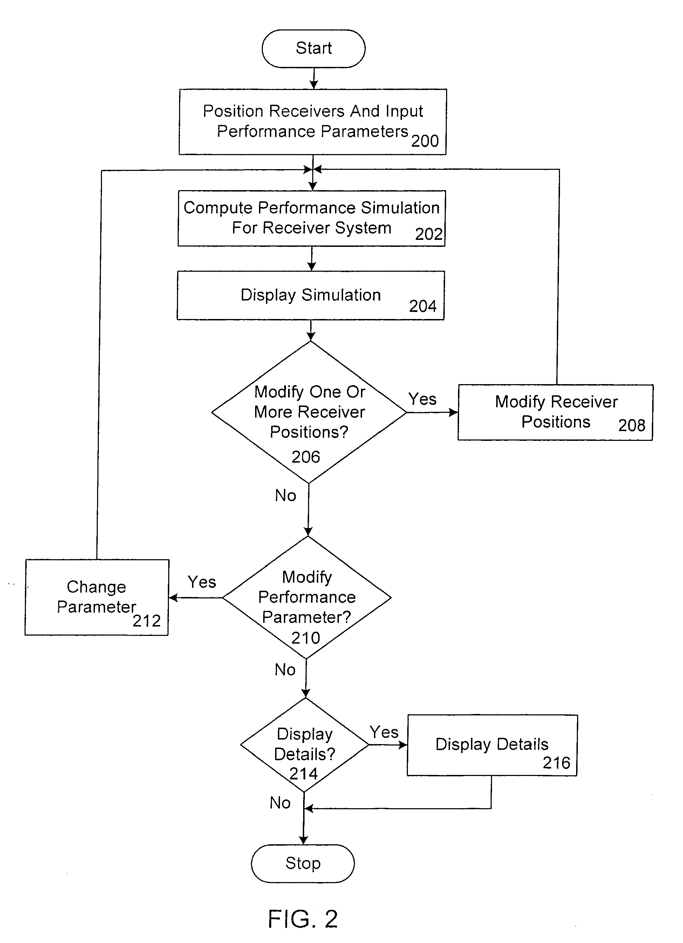

FIG. 2 is a flowchart of a first method for evaluating and optimizing RF receiver locations in an embodiment in accordance with the invention. Initially one or more receivers are positioned at different locations on a geographical or structural map and one or more performance parameters input into the placement tool, as shown in block 200. The performance parameters define performance requirements and conditions in which the receivers will operate under in an embodiment in accordance with the invention.

The receivers may be positioned using a number of techniques. Bv way of example only, the receivers may be positioned with a mouse or stylus, by entering the coordinates of the locations in a user interface, or by downloading the locations from a server.

The map of an area is pre-stored in a memory (e.g., memory 108) in an embodiment in accordance with the invention. The map of an area is a geographical map or a floor plan of a building in an embodiment in accordance with the invention. The map may be obtained differently in other embodiments in accordance with the invention. For example, the map may be read from a database, input by a user, or downloaded from a server. The map may include other information to aid in the simulations. For example information on elevation, vegetation, building types and their locations, or building construction.

Based on the receiver locations and the performance parameters, a simulation of the performance of the receiver system is computed and displayed at blocks 202, 204. The performance of the receiver system is computed for one or more given outcomes. For example, the given outcomes include the probability of obtaining usable cross-correlation data, the probability of a signal or signals exceeding a minimum value at at least one receiver, or the probability of the signals exceeding a minimum value at at least N sensors, where N is a number less than or equal to the total number of receivers.

A determination is then made as to whether one or more receiver locations are to be modified. Modification includes the deletion, relocation, and addition of a receiver. For example, a user may want to temporarily delete a receiver to see how the performance of the receiver system is affected when the receiver fails at its present location. If one or more receiver locations are to be modified, the method passes to block 208 where the receiver location or locations are modified. The process then returns to block 202.

When a receiver location or locations is not modified at block 206, the method continues at block 210 where a determination is made as to whether one or more performance parameters are to be changed. If one or more parameters are to be changed, the method passes to block 212 where the parameter or parameters are changed. The performance parameters may be changed, for example, by selecting a parameter from a pull-down menu or by entering the parameter into a dialog box.

When a performance parameter is not changed, the process continues at block 214 where a determination is made as to whether detailed information for a particular location is to be displayed. A user may want to know more detailed information about the effects of a receiver layout at a particular location on the map. For example, a user may want to know timing information, one or more characteristics of a receiver, or the terrain at the particular location. The user may select the particular location in any given manner, including, but not limited to, pointing or dragging a cursor over an area, pressing a stylus to the screen at the location, or by entering coordinates into a dialog box. The details regarding the particular location are then displayed to the user (block 216).

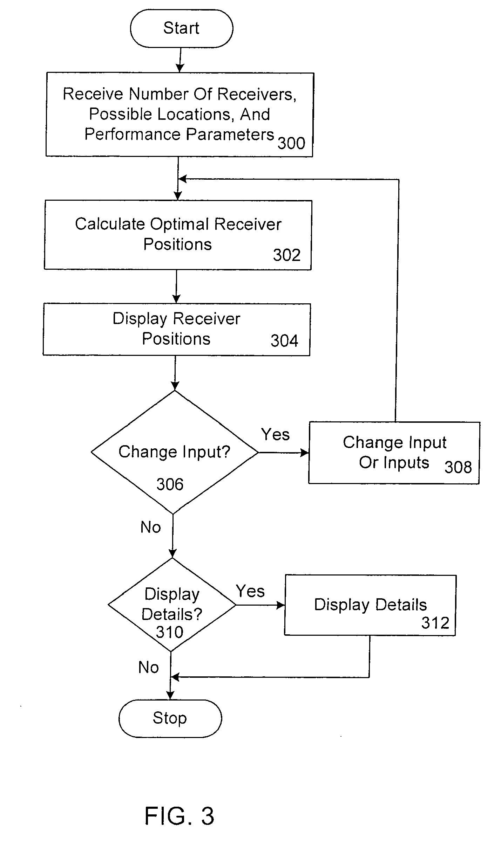

Referring to FIG. 3, there is shown a flowchart of a second method for evaluating and optimizing RF receiver locations in an embodiment in accordance with the invention. The method of FIG. 3 determines the optimum receiver locations in a geographical area based on a total number of receivers, a list of possible receiver locations, and one or more performance parameters. Initially the performance parameters, the list of possible receiver locations, and the number of receivers are received, as shown in block 300. By way of example only, each input may be input by a user, read from memory, downloaded from a server, or received from another device in a network.

The optimal location or locations for one or more receivers are then calculated and stored in memory, as shown in block 302. The location or locations are also displayed to the user (block 304). The location or locations are computed for one or more given outcomes. For example, the given outcomes include the probability of obtaining usable cross-correlation data, the probability of a signal or signals exceeding a minimum value at at least one receiver, or the probability of the signals exceeding a minimum value at at least N sensors, where N is a number less than or equal to the total number of receivers.

A determination is then made at block 306 as to whether some or all of the inputs entered at block 300 are to be changed. By way of example, only, a user may want to add, move, or delete one or more receivers or change one or more performance parameters. If the user wants to change one or more inputs, the process passes to block 308 where the input or inputs are changed. The method then returns to block 302.

When a user does not want to change an input entered at block 300, the process continues at block 310 where a determination is made as to whether detailed information for a particular location is to be displayed. As described in conjunction with block 214 in FIG. 2, a user may want to know more detailed information about the effects of a receiver layout at a particular location on the map. The details regarding the particular location are then displayed to the user (block 316).

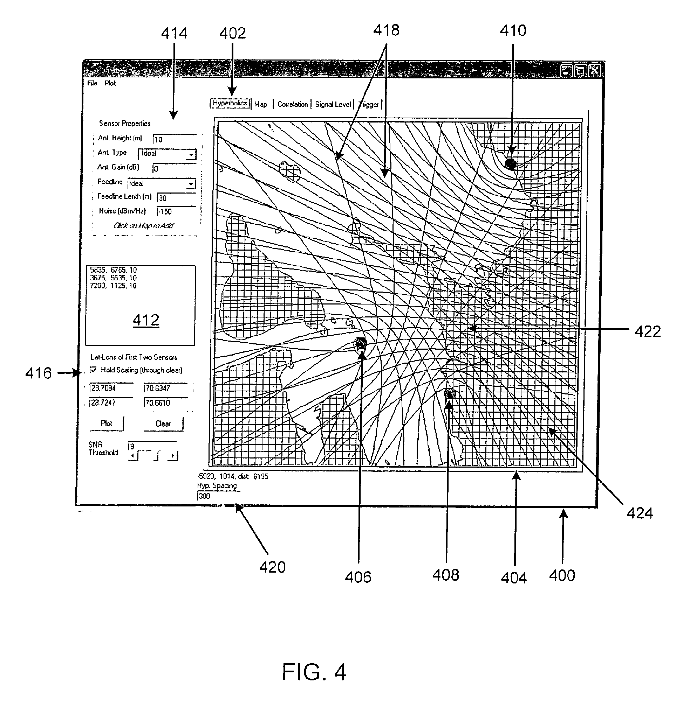

FIG. 4 depicts a user interface displaying a first receiver placement image in an embodiment in accordance with the invention. User interface 400 is included in a receiver placement application program and includes several options to display receiver placement images, including hyperbolic, map, correlation, signal level, and trigger in an embodiment in accordance with the invention. In the embodiment of FIG. 4, the hyperbolic tab 402 is selected and the given outcome is time difference of arrival accuracy.

Receiver placement image 404 has been generated for three receivers positioned at locations 406, 408, 410. A user selects the receivers from a list of possible receivers displayed in box 412. In other embodiments in accordance with the invention, the receiver locations may be entered into user interface 400 using other techniques. For example, a location or locations may be entered by clicking on an area in image 404 using a mouse or stylus, by dragging and dropping an icon onto a location, or by entering the coordinates for each location into user interface 400.

User interface 400 allows a user to input properties associated with each receiver in an embodiment in accordance with the invention. The properties are included in the simulation as performance parameters. To enter one or more properties for a receiver, a user selects or enters the property or properties in area 414. Area 414 depicts pull-down menus for the noise, antenna height, type, and gain, and the type of feedline and its length. Other embodiments in accordance with the invention can include additional or different properties for each receiver. The user then places the receiver having these properties on a location in the map.

In another embodiment in accordance with the invention, user interface 400 allows a user to enter coordinates for two receivers via dialog box 416. The coordinates are entered as latitude and longitude values in an embodiment in accordance with the invention. These coordinates are used to properly scale the map image relating distance to pixels. In another embodiment in accordance with the invention, the coordinates may be entered differently, such as, for example, as x and y coordinates. And in other embodiments in accordance with the invention, the coordinates may be associated with other features on the map, such as the upper left and lower right corners, or the map scaling may be read from a database, input by a user, or downloaded from a server.

Hyperbolic lines 418 representing a constant time difference of arrival between pairs of receivers are plotted based on locations 406, 408, 410. The spacing between each hyperbolic line represents a given time difference,-such as, for example, 300 nanoseconds. The time difference is entered into user interface 400 via dialog box 420. The spacing value entered into dialog box 420 is set based appearance, signal characteristics and timing accuracy in an embodiment in accordance with the invention. For appearance, a balance is achieved between the number of lines and the ability to see the map underneath. Moreover, one or more line attributes, such as width, style, color, may vary to improve viewability or to convey additional information. For signal characteristics, typically narrow bandwidth signals result in broader cross-correlation pulse shapes. With broader shapes, TDOA estimates are less accurate. The lines spacing may be adjusted to give an indication of the accuracy for a given signal. For timing accuracy of the receivers, the hyperbolic spacing may be adjusted to show the optimal performance for a given level of receiver synchronization.

Hyperbolic lines 418 are plotted using the location of each receiver, any properties input for each receiver entered into area 414, and hyperbolic spacing 420. Receiver placement image 404 and hyperbolic lines 418 allow a user to see a visual representation of the TDOA accuracy of receivers positioned at locations 406, 408, 410. For example, as shown in FIG. 4 region 422 has better TDOA accuracy than region 424.

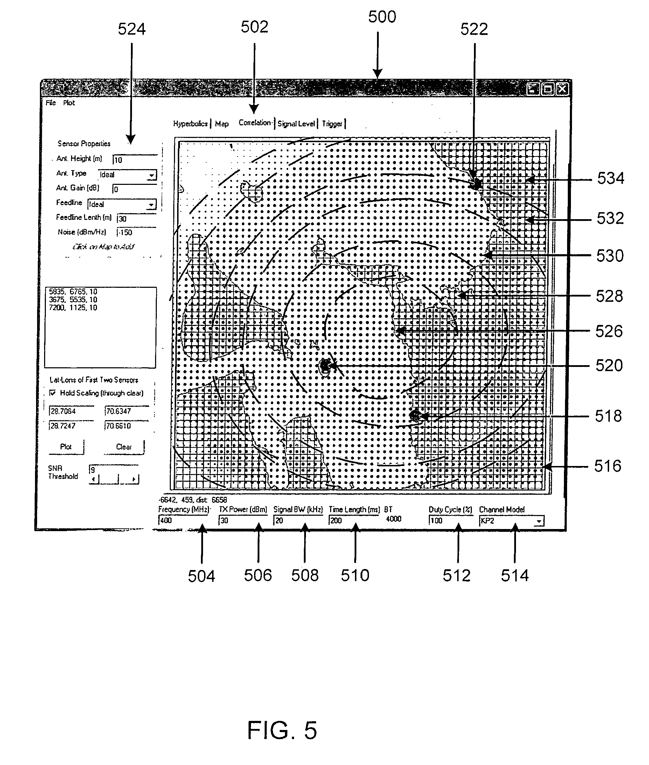

Referring to FIG. 5, there is shown a user interface displaying a second receiver placement image in an embodiment in accordance with the invention. User interface 500 is included in a receiver placement application program and includes several options to display receiver placement images, including hyperbolic, map, correlation, signal level, and trigger in an embodiment in accordance with the invention. In the embodiment of FIG. 5, the correlation tab 502 is selected and the given outcome is the probability of obtaining usable cross-correlation data.

To estimate a signal emitter location to a hyperbolic line, geolocation based on TDOA techniques require an estimate of time difference of arrival between two receivers. With two estimates of time difference, two hyperbolic lines are formed and the location estimate is at the intersections (or intersections) of the two hyperbolic lines. For geolocation estimates in three dimensions, more than two estimates of geolocation are required. The estimates of time difference of arrival may come from using cross-correlation data between receivers. With three receivers, three cross-correlations are possible using all possible pairing combinations. With four receivers, there are six possible combinations. Moreover, the environment affects signal strength and introduces multipath.

User interface 500 allows a user to input properties associated with a signal emitter in an embodiment in accordance with the invention. The signal emitter properties are included in the performance parameters. For example, user interface 500 allows a user to enter the frequency 504, power 506, signal bandwidth 508, time length 510, and duty cycle 512. Channel model 514, an environmental parameter, is also entered into user interface 500. These values are entered using pull-down menus in an embodiment in accordance with the invention. Other embodiments in accordance with the invention may enter the values different, including by dialog boxes and check boxes. Moreover, additional or different properties for a signal emitter may be included in user interface 500 in other embodiments in accordance with the invention.

Receiver placement image 516 displays receivers positioned at three locations 518, 520, 522. Properties for each receiver may be entered using area 524. Using locations 518, 520, 522, any properties entered for each receiver, and the signal emitter properties, regions 526, 528, 530, 532, 534 are generated and indicate a value or range of values for the probability of obtaining usable cross-correlation data. For example, region 526 may represent an 80-90% probability, region 528 a 70-79% probability, region 530 a 60-69% probability, region 532 a 50-59% probability, and region 534 probabilities less than 50%.

Each region may indicate a value or range of values in several ways. For example, in the embodiment of FIG. 5, ranges of probabilities are - assigned a particular color. Region 526 may be different shades of red with bright red assigned to the highest probability and then darker shades of red used as the probability decreases when the distance to region 528 becomes smaller. Similarly, region 528 may be different shades of blue, region 530 different shades of green, region 532 different shades of yellow, and region 532 different shades of orange.

In addition to being assigned a color, each region may indicate the different probabilities in each region with different sized dots or other graphical indicators. For example, region 534 is illustrated with two different sized dots, and the dots may be assigned the same color, two different shades of color, or two contrasting colors.

And in yet another embodiment in accordance with the invention, regions 526, 528, 530, 532, 534 may include contouring lines similar to those used in topology maps. For example, a number of closely spaced lines may be drawn in region 526, where the probability of obtaining usable cross-correlation data is highest. The higher the probability, the closer the lines are drawn to one another.

In one embodiment in accordance with the invention, the cross-correlation quality for a pair of sensors is determined by estimating the level of the correlation peak relative to the correlation noise and comparing that ratio to a threshold. The ratio is determined using the estimated signal and noise levels at each receiver, the bandwidth of the signal, and the duration over which the signal can be observed. It is assumed that the noise at each receiver location is uncorrelated.

In another embodiment in accordance with the invention, the quality of correlation is also related to the cross-correlation pulse distortion the results from multipath introduced by the environment. The probability of usable correlation data as indicated in regions 526, 528, 530, 532, 534 are then determined from the probability of each cross-correlation pair exceeding the quality threshold and the number of cross-correlation pairs required. The number of cross-correlation required to exceed the quality threshold at a location may be specified independent of the total number of receivers pairings.

And in yet another embodiment in accordance with the invention, quality indicators of each cross-correlation pair are combined to produce an indicator of overall quality with the level of quality indicated in regions 526, 528,530,532,534.

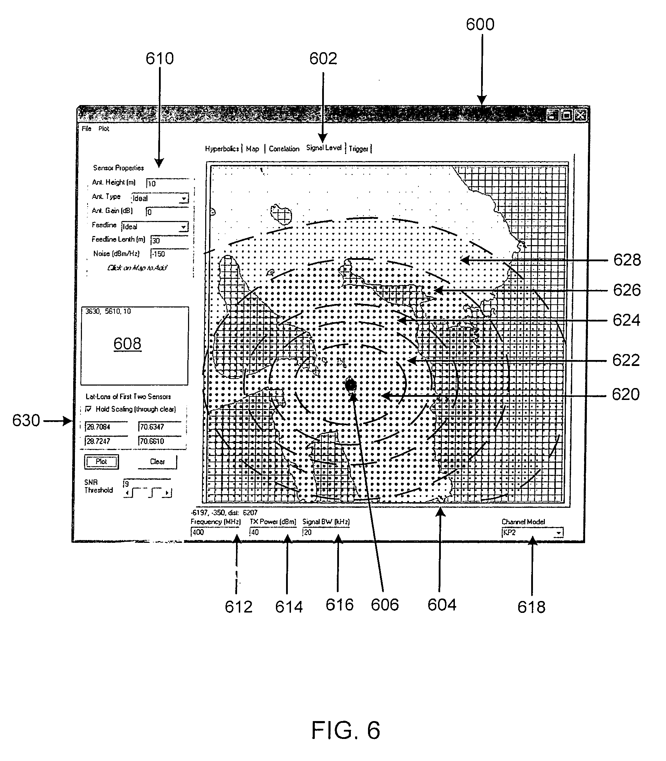

FIG. 6 is a user interface displaying a third receiver placement image in an embodiment in accordance with the invention. User interface 600 is included in a receiver placement application program and includes several options to display receiver placement images, including hyperbolic, map, correlation, signal level, and trigger in an embodiment in accordance with the invention. In the embodiment of FIG. 6, the signal tab 602 is selected and the given outcome is geolocation accuracy based on time difference of arrival. Other embodiments in accordance with the invention may assign a different parameter to signal tab 602. For example, the signal tab may represent the probability of the signal level exceeding a threshold at one or more receiver locations for a given signal emitter at some location.

Receiver placement image 604 displays a receiver at location 606. The receiver is selected from area 610. Receiver properties (area 610) and the frequency 612, power 614, signal bandwidth 616, and channel model 618 for a signal emitter are entered into user interface 600. Based on location 606, the properties in area 610, and the signal emitter properties, regions 620, 622, 624, 626, 628 are generated. Each region indicates a probability or range of probabilities that a signal will exceed a minimum value or minimum signal-to-noise ration (SNR). The minimum value is entered into user interface 600 via box 630. Each region may be assigned for example, a particular color, dot size, and number of contour lines based on the range of probabilities in each region.

In another embodiment in accordance with the invention, geolocation based on direction finding techniques that establish lines of bearing (LOB's) at each receiver location may be simulated. With one receiver, a signal emitter may be positioned anywhere along the LOB. With two or more receivers, the estimated position of the signal emitter is at the intersection or intersections of the LOB's. To use a LOB geolocation technique, the signal to noise level must exceed a threshold at at least two receiver locations. Other applications involving multiple receivers may also require a minimum SNR threshold to be simultaneously observed at one or more receiver locations. In the embodiment of FIG. 6, the probability of the signal level from a signal emitter at any location on the map, simultaneously exceeding the SNR threshold 630 at receiver position 606 is indicated.

Although receiver placement image 604 displays only one receiver, other embodiments in accordance with the invention may display multiple receivers. Moreover, the number of receivers required to exceed the SNR threshold 630 at a location may be specified independent of the total number of receivers. For example, for direction finding application requiring only two LOB's to form an intersection, the number of receivers required to exceed a threshold is also two. Using three or more receivers will generally improve the probability that at least two receivers will meet the minimum SNR threshold.

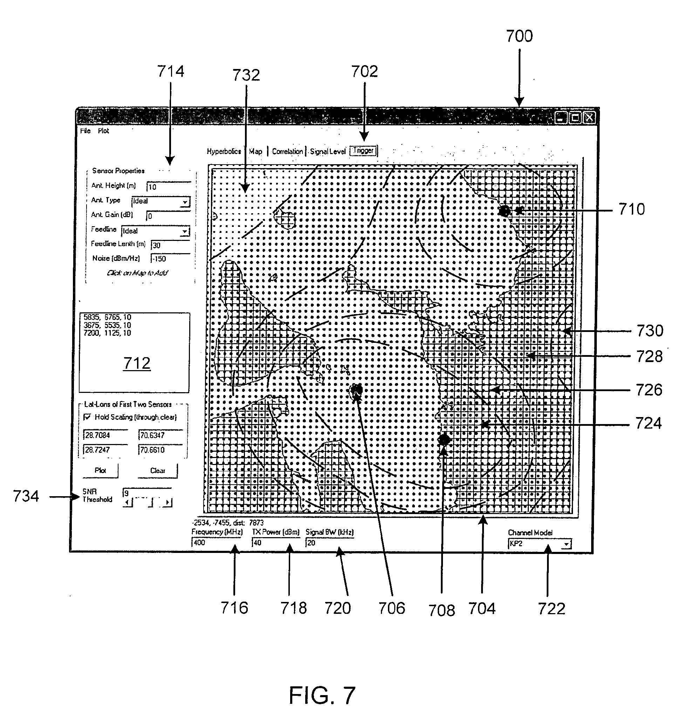

Referring to **FIG. 7,** there is shown a user interface displaying a fourth receiver placement image in an embodiment in accordance with the invention. User interface 700 is included in a receiver placement application program and includes several options to display receiver placement images, including hyperbolic, map, correlation, signal level, and trigger in an embodiment in accordance with the invention. In the embodiment of **FIG. 7,** the trigger tab 702 is selected and the given outcome is the probability of a signal level exceeding a level or SNR threshold at at least one sensor. A trigger threshold represents a value at which at least one receiver will "trigger" and perform some action. For example, a receiver may acquire signal data when triggered in an embodiment in accordance with an invention. In another embodiment in accordance with the invention, a receiver may cease acquiring data when triggered.

Other applications may also require the signal level to exceed a specified level or SNR. For example, the receiver network may be used to detect the presence of unknown signals. For detection, the unknown signal need only be observed at one of the receivers in the network. If the receiver is a spectrum analyzer, for example, the signal will be detected if the signal exceeds the noise floor by some minimum threshold, or it exceeds a power level.

Receiver placement image 704 displays receivers at location 706, 708, 710. The receivers are positioned at locations 706, 708, 710 by selecting receivers from area 712 in an embodiment in accordance with the invention. One or more properties for each receiver are entered in area 714 and the frequency 716, power 718, and signal bandwidth 720, for a signal emitter are entered into user interface 700. Channel model 722, an environmental parameter, is also entered in user interface 700.

Based on locations 706, 708, 710, the properties in area 714, and the signal emitter properties, regions 724, 726, 728, 730, 732 are generated. Each region indicates a probability or range of probabilities that a signal will exceed a trigger threshold. The minimum value is entered into user interface 700 via box 734. Each region may be assigned for example, a particular color, dot size, and number of contour lines based on the range of probabilities in each region.

As discussed in conjunction with block 214 in **FIG. 2** and block 312 in **FIG. 3,** embodiments in accordance with the invention may display additional information, which may include the exact value associated with the graphical indication, the exact coordinates of that location, path loss to each receiver, dilution of precision, or results from other tabs. For example, while viewing hyperbolic tab 202, a user can select a location using a cursor or icon and create or update a dialog box containing an indication of the probability of usable correlation data.

As discussed earlier, there are usually a limited number of locations where receivers can be placed. Also, when the number of receivers is less than the number of potential locations, a subset of the possible receiver locations must be selected. This can be done manually in an embodiment in accordance with the invention. A user may enter the data for each subset and determine the optimal subset after viewing the simulated performances of each subset.

The optimization is automated in another embodiment of the invention. Performance parameters such as receiver properties, all possible receiver locations, and the number of locations that can be populated are specified by a user. The user then specifies one or more given outcomes to a cost function. The given outcomes include, but are not limited to, optimization parameters such as geolocation accuracy, probability of signal detection and cost of installation, which may be different for each location. Each performance parameter is also assigned a weighting function based on its relative importance. The cost function is then evaluated for all combinations of receiver sites and an ordered list of receiver locations provided.

Embodiments in accordance with the invention may also designate parameters such as antenna height as variables. And the variable parameters may impact other variables, such as installation costs. An exhaustive search of the different variable combinations may then be performed and the network performance simulated. And techniques other than an exhaustive search technique may be used to determine specific values for the variable parameters. For example, a Monte Carlo or other methods may be employed to optimize the cost function for each possible sensor configuration before the ordered list of receiver locations is computed.

The disclosures in United States patent application No. 11/114,759, from which this application claims priority, and in the abstract accompanying this application are incorporated herein by reference.

## Claims

1. A method of evaluating the performance of a receiver network based on one or more receiver locations, including the steps of:
receiving the one or more RF receiver locations;
receiving one or more performance parameters;
generating performance data for a given outcome using the one or more receiver locations and the one or more performance parameters; and
displaying the generated performance data (404).

2. A method according to claim 1, including modifying one or more receiver locations.

3. A method according to claim 1 or 2, including changing a value of one or more performance parameters.

4. A method according to any one of claims 1 to 3, wherein the one or more performance parameters comprise one or more properties associated with each receiver.

5. A method according to any one of claims 1 to 4, wherein the one or more performance parameters comprise one or more properties associated with a signal emitter.

6. A method of generating a location for one or more RF receivers, including the steps of:
receiving a plurality of inputs comprises of a number of RF receivers, a list of possible receiver locations, and one or more performance parameters;
determining the location of each RF receiver using the plurality of inputs; and
displaying the location of each RF receiver.

7. A method according to claim 6, wherein displaying the location of each RF receiver comprises displaying the location of each receiver on a map of a geographical area.

8. A method according to claim 6 or 7, including:
generating performance data for a given outcome using the one or more receiver locations and the one or more parameters; and
displaying the generated performance data with the location of each RF receiver.

9. A system for evaluating the performance of an RF receiver system, including:
an input device (102);
a processor (106) operable to generate performance data for the RF receiver system using one or more RF receiver locations and one or more performance parameters; and
a display (104) operable to display the generated performance data.

10. A system according to claim 9, wherein the processor (106) is operable to optimize one or more RF receiver locations for a given outcome.
